# FASCICULE DE BREVET EUROPEEN

(11) **EP 2 172 363 B1**
(45) Date de publication et mention de la délivrance du brevet: **29.08.2012**
(21) Numéro de dépôt: 09171997.1
(22) Date de dépôt: 01.10.2009
(51) Int. Cl.: B60N 3/04

(54) **Surtapis, destiné à protéger un tapis de première monte dans un véhicule automobile**
Teppich zum Schutz eines Erstausstattungsteppichs in einem Kraftfahrzeug
Carpet for shielding a first equipmement carpet in an automotive vehicle

(30) Priorité: 01.10.2008 FR 0856649
(43) Date de publication de la demande: 07.04.2010
(73) Titulaire: FACAM DISTRIBUTION, 59150 Wattrelos (FR)
(72) Inventeur: Mace de Gastines, Christophe, 59420, MOUVAUX (FR)
(74) Mandataire: Balesta, Pierre

(56) Documents cités:
- EP-A- 1 302 363
- DE-A1- 4 439 208
- FR-A- 2 694 248
- GB-A- 1 173 138

## Description

L'invention concerne le domaine technique des surtapis destinés à protéger un tapis de première monte dans un véhicule automobile.

Les constructeurs automobiles recouvrent les planchers des véhicules automobiles de moquette découpées et collées selon les dimensions et reliefs de ces planchers.

Ces moquettes désignées dans la présente demande par le terme tapis de première monte posent des problèmes d'entretien puisqu'ils ne peuvent être démontés pour leur nettoyage ou leur renouvellement.

Par ailleurs, le tapis de première monte n'est parfois pas assorti avec la couleur des housses de siège, du capitonnage, ou de la carrosserie et sur les véhicules de grande série, est de qualité très moyenne.

Afin de pallier à ces difficultés et laisser aux propriétaires des véhicules le choix d'agencer l'intérieur de leur véhicule, des fabricants d'accessoires mettent à leur disposition des surtapis amovibles, destinés à être placés sur le tapis de première monte.

On connaît des surtapis présentant une surface entièrement plane et constitués par une moquette dont la face intérieure est formée d'une plaque en caoutchouc, la finition étant assurée par surjetage des bords extérieurs. Ces surtapis sont souples et plient sous leur propre poids.

On connaît également des surtapis thermoformés comportant une moquette solidarisée à une feuille de renforcement en mousse à cellules ouvertes par une couche médiane en matière extrudée thermoformable. Généralement, il n'y a pas de feuille de renforcement en mousse, la couche médiane en matière extrudée et thermoformable forme directement la face intérieure du surtapis. Lesdites moquettes, quelles soient aiguilletées ou tuftées, sont consolidées par une fine couche de latex facilitant leur manutention. Ces surtapis thermoformés en trois dimensions sont suffisamment rigides de sorte qu'ils ne plient pas sous leurs propres poids et présentent l'avantage de former un bac de récupération des salissures.

FR 2.694.248 A1 correspondant au préambule de 7a revendication indépendante de produit (1)) décrit un tapis réalisé à partir d'une moquette épousant la forme du plancher, dont le dessous est recouvert d'une couche de particules de caoutchouc et ayant une configuration tridimensionnelle obtenue par le moulage de bandes de moquette préalablement enduites d'une matière conférant une semi-rigidité et l'imperméabilité. La configuration tridimensionnelle du tapis présente un rebord en surélevation le long de son côté arrière et au moins en partie le long de ses deux côtés latéraux.

Ces surtapis doivent répondre à de nombreux critères, la plupart édictés par le cahier des charges des constructeurs automobiles :
- ils doivent être flexibles pour épouser les formes gauche du plancher, ces formes gauches étant liées notamment aux passages de roues, à la console centrale entre les sièges avant, au tunnel de transmission, aux repose-pied ;
- ils doivent pouvoir être utilisés sur des véhicules de marques et modèles différents, et ceci malgré les différences de conformation en trois dimensions des planchers de ces véhicules ;
- ils doivent présenter une grande résistante à l'usure par frottement et poinçonnement. Ce poinçonnement est particulièrement marquée lorsque l'usager porte des chaussures à talons ;
- ils doivent être esthétiques et aussi personnalisés que possible ;
- ils doivent présenter une rugosité de surface à la fois sur leurs face intérieure et extérieure afin que le pied de l'utilisateur ne puisse glisser de son point d'appui sur le surtapis lorsqu il est engagé sur une pédale ou que le surtapis ne glisse lui-même sur le tapis de première monte et ne forme des plis;
- ils doivent être confortables, imputrescibles et faciles à nettoyer ;
- ils doivent pouvoir être présentés agréablement en linéaire dans les magasins ;
- ils doivent pouvoir être facilement ôtés et ne pas être trop lourds de sorte d'être facilement secoués pour en chasser les graviers et les particules amenés par les chaussures des utilisateurs.

Les surtapis thermoformés sont plus onéreux à fabriquer que les surtapis ayant une surface totalement plane et des bords surjetés que ce soit au niveau des matières premières ou du procédé de fabrication comprenant des étapes supplémentaires.

La présente invention pallie les problèmes précités en ce qu'elle a pour objet un surtapis, comprenant une face extérieure formée d'un textile aiguilleté ou tufté et une couche d'au moins un polymère chargé et ayant une configuration tridimensionnelle obtenue par thermoformage, avec un rebord en surélévation le long de son côté arrière et au moins en partie le long de ses deux côtés latéraux, caractérisé en ce que la couche de polymère chargé est obtenue par polymérisation d'un latex SBR [styrène-butadiène-rubber] chargé, comprenant une proportion suffisante de styrène, au moins 70% en volume dans le mélange styrène-butadiène du latex non chargé, afin d'être thermoplastique la proportion en poids dudit latex non chargé dans le surtapis est d'au moins 5%, et en ce que ledit textile aiguilleté ou tufté est consolidé par ladite couche de polymère en sorte d'obtenir que le surtapis ayant une configuration tridimensionnelle résiste à la pliure sous son propre poids.

Avantageusement, la couche de polymère permet à la fois de consolider la nappe textile aiguilletée ou tuftée et de former une couche de renfort thermoformable.

La nappe textile aiguilletée peut être pré-aiguilletée en sorte qu'elle ait suffisamment de cohésion pour son stockage et sa mise en oeuvre, mais ce préaiguilletage ne remplace par la couche de polymère chargé assurant la consolidation finale des fibres aiguilletées de la nappe textile.

Les minces couches de latex mis en oeuvre dans l'état de la technique permettent de consolider le liage des fibres dans les nappes textiles mais ne sont pas adaptées pour être thermoformables. De plus, les nappes textiles ainsi consolidées ne résistent pas à la pliure sous leurs propres poids.

Dans la présente invention, ladite couche de polymère, une fois polymérisée, demeure thermoplastique et apte à subir une étape de thermoformage, en sorte de conférer au surtapis sa configuration tridimensionnelle. La demanderesse a établi que le latex de SBR non chargé devait représenter dans la couche de polymère une quantité minimum de 5% en poids du surtapis pour que la nappe textile puisse être thermoformée.

Des étapes de laminage et d'extrusion-calandrage sont ainsi supprimées ce qui permet de réduire le coût du procédé de fabrication et la consommation de matières premières.

Avantageusement, la couche de polymère est chargée en sorte que le surtapis soit suffisamment rigide afin qu'il ne plie pas sous son propre poids et qu'il présente une bonne tenue puisque le surtapis est amovible.

Lors de l'étape de thermoformage, la source de chaleur est appliquée sur la couche de polymère. La couche de polymère doit ainsi être en quantité suffisante dans le surtapis, au moins 30% en poids, de préférence au moins 50% en poids, afin que les fibres de la nappe textile ne soient pas dégradées par la chaleur et que le surtapis soit suffisamment rigide.

La face intérieure du surtapis est de préférence laminée avec un film thermocollant afin de rendre celle-ci imperméable aux liquides, notamment à l'eau, avant la mise en forme tridimensionnelle avec la nappe textile consolidée par la couche de polymère. Ledit film est de préférence dans un matériau ayant une température de fusion permettant son thermocollage sans dégrader ladite couche de polymère et les fibres de la nappe textile et apte à permettre sa mise en forme tridimensionnelle.

Dans une variante, le demandeur a obtenu d'excellents résultats pour une proportion de styrène en volume dans le mélange styrène-butadiène du latex destiné à former la couche de polymère, de l'ordre d'au moins 80%, notamment de l'ordre de 85%. La mise en forme du surtapis lors de l'étape de thermoformage est améliorée puisque les temps de fabrication et l'énergie thermique nécessaire sont réduits. Le surtapis conserve sa résistance à la pliure sous son propre poids et ses propriétés mécaniques jusqu'à 70°C conformément aux cahiers des charges des constructeurs automobiles.

Dans une variante de réalisation, le textile aiguilleté est exclusivement en polyester.

Le demandeur s'est aperçu qu'une nappe de textile aiguilletée dont les fibres sont exclusivement en polyester procure un surtapis dont la face extérieure revêtu de ladite nappe ne présente pas de défauts et irrégularités voir des zones rigides.

Une explication à ce phénomène est que dans une nappe aiguilletée, les fibres sont enchevêtrés les unes avec les autres. Ainsi au cours du thermoformage, lorsque des fibres données se rétractent elles entraînent les fibres voisines et ainsi de suite. Ce phénomène est atténué lorsqu'il s'agit d'une moquette tuftée. En effet, des groupes de fibres sont liés en un point donné du canevas tissé et dans une proportion moindre les unes aux autres. Ce phénomène de rétraction s'observe davantage avec des fibres ayant des températures de fusion faibles, telles que pour les fibres en polypropylène.

Dans une variante de réalisation, le textile tufté est exclusivement en polypropylène ou en polyamide.

Les fibres de la nappe textile tuftée ayant une meilleure résistance thermique au thermoformage, il est possible de réaliser des surtapis avec des fibres ayant une faible température de fusion telles que des fibres en polypropylène.

Dans une variante de réalisation, le ratio en poids charge/polymère dans la couche de polymère chargé est de l'ordre de 5 à 7.

La demanderesse a établi qu'une quantité importante de charge est nécessaire pour que le surtapis ait une bonne main c'est à dire résiste à la pliure sous son propre poids.

Dans une variante de réalisation, le surtapis comporte, sur sa face intérieure destinée à être appliquée sur le tapis de première monte, un revêtement granuleux.

Ce revêtement granuleux permet d'améliorer la résistance au glissement du surtapis sur le tapis de première monte.

Dans une sous-variante de réalisation, ledit revêtement granuleux est formé de poudrette de caoutchouc.

La poudrette de caoutchouc est saupoudrée sur la face intérieure du surtapis après l'enduction de la nappe textile de mousse aqueuse de latex SBR chargé.

Dans une variante de réalisation, le textile aiguilleté est constitué au moins en partie de fibres de polyester recyclées.

Dans une variante de réalisation, le surtapis a un poids/m² allant de 1200 g/m² à 1900 g/m² et la couche de polymère est obtenue par polymérisation de 80 à 190 g/m² dudit latex SBR.

Dans une variante de réalisation, le surtapis fait de l'ordre de 1750 g/m², et le textile aiguilleté ou tufté fait de l'ordre de 550 g/m², et la couche de polymère est obtenue par polymérisation dudit latex à raison de l'ordre de 150 g/m².

Dans une variante de réalisation, la couche de polymère chargée contient de l'ordre de 900 g/m² de charge, notamment de craie, et en ce que la poudrette de caoutchouc fait de l'ordre de 150 g/m².

La présente invention a également pour objet selon un deuxième aspect un procédé de fabrication d'un surtapis selon l'une des variantes de réalisation décrites ci-dessus.

Le procédé comprend, de manière caractéristique, les opérations suivantes :
a) préparer une mousse aqueuse à partir d'un latex SBR [styrène-butadiène-rubber] et à partir d'une charge inerte, ledit latex comprenant une proportion suffisante de styrène afin d'être thermoplastique, au moins 70% en volume de styrène, dans le mélange styrène-butadiène du latex non chargé de préférence de l'ordre d'au moins 80% en volume de styrène, notamment de l'ordre de 85%,
b) enduire une nappe aiguilletée ou tuftée non consolidée à l'aide de ladite mousse,
c) soumettre la nappe enduite à un traitement thermique apte à polymériser le latex, à évacuer l'eau en sorte d'obtenir un produit plat et de consolider ladite nappe,
d) thermoformer ledit produit plat à la configuration tridimensionnelle souhaitée pour obtenir un surtapis dont la proportion en poids de latex est d'au moins 5%.

Dans une variante de réalisation, ledit procédé comprend une opération complémentaire consistant à pulvériser de la poudrette de caoutchouc sur l'enduction de mousse avant l'étape de thermoformage.

La présente invention sera mieux comprise à la lecture de deux exemples de réalisation, cités à titre non limitatif, et illustrés dans les figures suivantes, annexées à la présente, et dans lesquelles :
- la figure 1 est une vue de dessus d'un premier exemple de surtapis selon la présente invention ;
- la figure 2 est une vue de dessous du surtapis représenté à la figure 1;
- la figure 3 est une vue selon le plan de coupe III-III représenté à la figure 1 ;
- la figure 4 est une vue selon le plan de coupe III-III représenté à la figure 1 d'un second exemple de surtapis ;
- la figure 5 est une représentation schématique d'un exemple de procédé de fabrication du surtapis représenté aux figures 1 à 3.

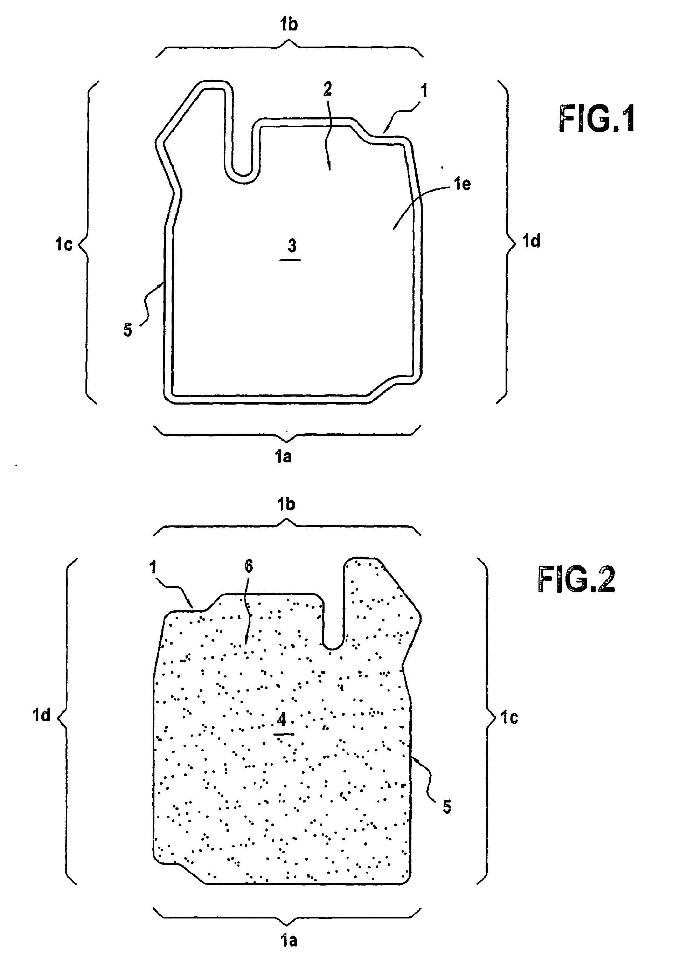

Le premier exemple de surtapis 1 représenté aux figures 1 à 3, destiné à protéger un tapis de première monte dans un véhicule automobile, comprend une face extérieure 2 formée d'un textile aiguilleté 3 exclusivement en polyester et une couche 4 d'au moins un polymère chargé. Le surtapis 1 a une configuration tridimensionnelle obtenue par thermoformage et comprend un rebord 5 en surélévation le long de son côté arrière 1a et de ses deux côtés latéraux 1c,1d. Le bord 1b avant ne comprend pas de rebord surélevé. Le rebord sur les côtés latéraux 1c,1d est de préférence en déclivité jusqu'au bord avant 1b ou il se trouve dans le même plan que la surface centrale plane 1e.

Le polymère de la couche 4 est obtenu par polymérisation d'un latex de SBR comprenant de préférence au moins 70% en volume de styrène dans le mélange styrène-butadiène du latex non chargé. Dans un exemple précis, cette proportion est d'environ 85% de styrène. Le surtapis 1 a un poids de l'ordre de 1750 g/m², le textile aiguilleté 3 a un poids de 550 g/m² et la quantité de SBR est de l'ordre de 150 g/m² soit supérieure à 5% en poids du surtapis 1. La couche 4 de polymère contient de l'ordre de 900 g/m² de charge, de préférence de la craie, et représente plus de 60% en poids du surtapis.

La face intérieure 5 du surtapis 1 représentée à la figure 2, présente un revêtement granuleux 6 formé de poudrette de caoutchouc représentant plus de 5% en poids du surtapis 1.

La face intérieure 5 du surtapis 1 est, dans cet exemple précis, revêtue d'un film thermocollant -non représenté- en polyéthylène basse densité (PE BD) ayant une face interne apte à adhérer avec la face intérieure 5 du surtapis 1, en particulier avec la couche de polymère 4, et activable par apport de chaleur, la face externe dudit film étant imperméable aux liquides et en particulier à l'eau. Ledit film a, de préférence, une épaisseur de l'ordre de 100 µm.

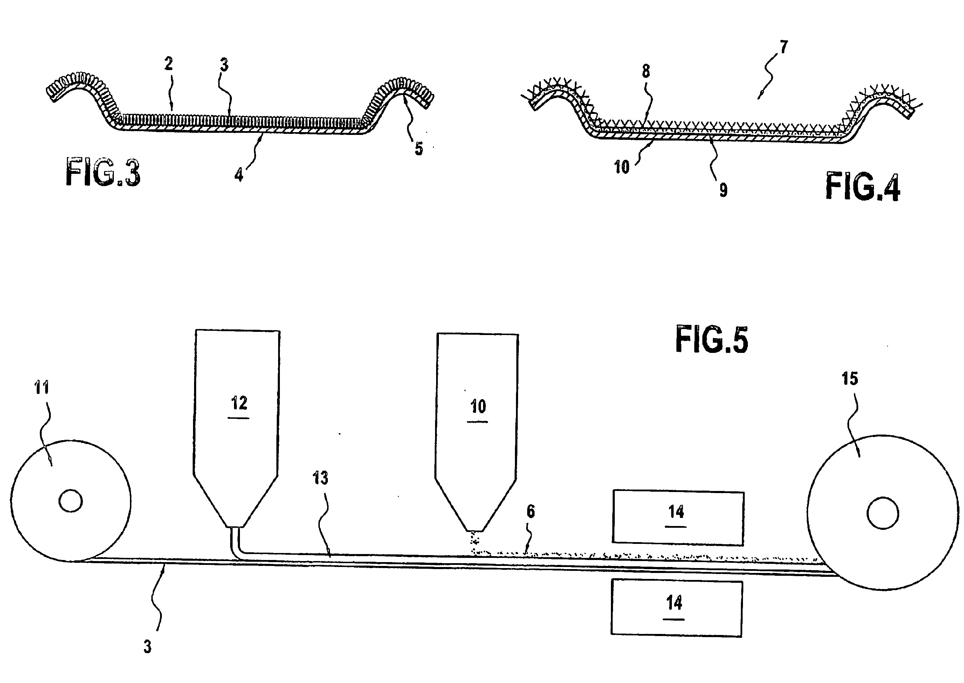

Le seconde exemple de surtapis 7 représenté à la figure 4 diffère du premier exemple de surtapis 1 en ce que la nappe textile est un textile tufté 8 en polypropylène et comporte donc des fibres se projetant de la face extérieure du canevas 9. La couche 10 de polymère chargé est disposée sur la face intérieure du canevas 9.

La figure 5 représenté de façon schématique les différentes étapes du procédé de fabrication du premier exemple de surtapis 1.

Le textile aiguilleté 3 est dévidé d'une bobine d'alimentation 11 et convoyé vers une station d'enduction 12 déposant une mousse aqueuse 13 comprenant un latex de SBR et une charge inerte à l'aide d'une racle. Le textile aiguilleté 3 enduit est ensuite convoyé vers une station de pulvérisation 13 de poudrette de caoutchouc 10 puis dans sur une rame de chauffage 14 pour la polymérisation du latex de SBR et l'évaporation de l'eau en sorte d'obtenir un produit plat. Le textile aiguilleté 3 ainsi consolidé est stocké sur un touret 15.

La dernière étape de thermoformage, non représentée, consiste à disposer la nappe aiguilletée et consolidée dans un moule comportant des parties mâle et femelle, la source de chaleur nécessaire au ramollissement de la couche de polymère chargée 3 est appliquée en direction de ladite couche de polymère.

Le thermocollage d'un film conférant une imperméabilité aux liquides à la face intérieure 5 du surtapis 1 est effectué de préférence avant l'étape de themoformage.

D'après le cahier des charges des constructeurs automobiles, le surtapis 1,7 doit conserver ses propriétés jusqu'à 70°C.

Le procédé de fabrication est ainsi le même pour la fabrication d'un surtapis 7 comportant une face extérieure constituée d'une nappe textile tuftée 8.

## Revendications

1. Surtapis (1,7), destiné à protéger un tapis de première monte dans un véhicule automobile, comprenant une face extérieure (2) formée d'un textile aiguilleté (3) ou tufté (8) et une couche (4,10) d'au moins un polymère chargé et ayant une configuration tridimensionnelle obtenue par thermoformage, avec un rebord (5) en surélévation le long de son côté arrière (1a) et au moins en partie le long de ses deux côtés latéraux (1c,1d), **caractérisé :**
- **en ce que** la couche de polymère chargé est obtenue par polymérisation d'un latex SBR [styrène-butadiène-rubber] chargé, comprenant une proportion suffisante de styrène, au moins 70% en volume dans le mélange styrène-butadiène du latex non chargé, afin d'être thermoplastique et dont la proportion en poids dudit latex non chargé dans le surtapis (1) est d'au moins 5%,
- et **en ce que** ledit textile aiguilleté (3) ou tufté (8) est consolidé par ladite couche de polymère (4),
en sorte d'obtenir que le surtapis ayant une configuration tridimensionnelle, résiste à la pliure sous son propre poids.

2. Surtapis (1) selon la revendication 1, **caractérisé en ce que** la couche de polymère chargé est obtenue par polymérisation d'un latex SBR [styrène-butadiène-rubber] chargé comprenant une proportion de l'ordre d'au moins 80% en volume de styrène, notamment de l'ordre de 85%.

3. Surtapis (1) selon l'une ou l'autre des revendications 1 et 2, **caractérisé en ce que** le textile aiguilleté (3) est exclusivement en polyester.

4. Surtapis (7) selon l'une ou l'autre des revendications 1 et 2, **caractérisé en ce que** le textile tufté (8) est exclusivement en polypropylène ou en polyamide.

5. Surtapis (1,7) selon l'une des revendications 1 à 4, **caractérisé en ce que** le ratio en poids charge/polymère dans la couche (4,10) de polymère chargée est de l'ordre de 5 à 7.

6. Surtapis (1,7) selon l'une des revendications 1 à 5, **caractérisé en ce qu'**il comporte, sur sa face intérieure (5) destinée à être appliquée sur le tapis de première monte, un revêtement granuleux.

7. Surtapis (1,7) selon la revendication 6, **caractérisé en ce que** ledit revêtement granuleux est formé de poudrette de caoutchouc.

8. Surtapis (1) selon l'une des revendications 3 à 7, **caractérisé en ce que** le textile aiguilleté (3) est constitué au moins en partie de fibres de polyester recyclées.

9. Surtapls (1,7) selon l'une des revendications 1 à 8, **caractérisé en ce qu'**il a un poids/m² de 1200 à 1900 g/m² et **en ce que** la couche de polymère (4,10) est obtenue par polymérisation de 80 à 190 g/m² dudit latex.

10. Surtapis (1,7) selon la revendication 9, **caractérisé en ce qu'**il fait de l'ordre de 1750 g/m², et **en ce que** le textile aiguilleté (3) ou tufté (8) fait de l'ordre de 550 g/m² et **en ce que** la couche de polymère (4,10) est obtenue par polymérisation dudit latex à raison de l'ordre de 150 g/m².

11. Surtapis (1,7) selon les revendications 7 et 10, **caractérisé en ce que** la couche de polymère (4,10) chargé contient de l'ordre de 900 g/m² de charge, notamment de craie, et **en ce que** la poudrette de caoutchouc fait de l'ordre de 150 g/m².

12. Procédé de fabrication d'un surtapis (1,7) selon la revendication 1 **caractérisé en ce qu'**il comprend les opérations suivantes :
a) préparer une mousse aqueuse à partir d'un latex SBR [styrène-butadiène-rubber] et à partir d'une charge inerte, ledit latex comprenant une proportion suffisante de styrène afin d'être thermoplastique, au moins 70% en volume de styrène, dans le mélange styrène-butadiène du latex non chargé, de préférence de l'ordre d'au moins 80% en volume de styrène,
b) enduire une nappe aiguilletée (3) ou tuftée (8) non consolidée à l'aide de ladite mousse,
c) soumettre la nappe enduite à un traitement thermique apte à polymériser le latex, à évacuer l'eau en sorte d'obtenir un produit plat et de consolider ladite nappe,
d) thermoformer ledit produit plat à la configuration tridimensionnelle souhaitée pour obtenir un surtapis (1,7) dont la proportion en poids de latex est d'au moins 5%.

13. Procédé selon la revendication 12, **caractérisé en ce qu'**il comporte une opération complémentaire consistant à pulvériser de la poudrette de caoutchouc sur l'enduction de mousse avant l'étape de thermoformage.

## Claims

1. A carpet mat (1,7), intended for protecting an original fitted carpet in a motor vehicle, comprising an outer face (2) formed with a needled (3) or tufted (8) textile and a layer (4, 10) of at least one filler-loaded polymer and having a three-dimensional configuration obtained by thermoforming, with a raised edge (5) along its rear side (1a), and at least partly along its two lateral sides (1c, 1d), **characterized:**
- **in that** the layer of filler-loaded polymer is obtained by polymerization of a filler-loaded SBR [styrene-butadiene-rubber] latex, comprising a sufficient proportion of styrene, at least 70% by volume, in the styrene-butadiene mixture of the non-filler-loaded latex, so as to be thermoplastic and the weight proportion of said non-filler-loaded latex in the carpet mat (1) is at least 5%,
- and **in that** said needled (3) or tufted (8) textile is consolidated with said polymer layer (4),
so as to obtain that the carpet mat having a three-dimensional configuration withstands folding under its own weight.

2. The carpet mat (1) according to claim 1, **characterized in that** the filler-loaded polymer layer is obtained by polymerization of a filler-loaded SBR [styrene-butadiene-rubber] latex comprising a proportion of the order of at least 80% by volume of styrene, notably of the order of 85%.

3. The carpet mat (1) according to either one of claims 1 and 2, **characterized in that** the needled textile (3) is exclusively in polyester.

4. The carpet mat (1) according to either one of claims 1 and 2, **characterized in that** the tufted textile (8) is exclusively in polypropylene or in polyamide.

5. The carpet mat (1, 7) according to one of claims 1 to 4, **characterized in that** the filler/polymer weight ratio in the filler-loaded polymer layer (4, 10) is of the order of 5 to 7.

6. The carpet mat (1, 7) according to one of claims 1 to 5, **characterized in that** it includes a granular coating on its inner face (5) intended to be applied on the original fitted carpet.

7. The carpet mat (1, 7) according to claim 6, **characterized in that** said granular coating is formed with crumb rubber.

8. The carpet mat (1) according to one of claims 3 to 7, **characterized in that** the needled textile (3) at least partly consists of recycled polyester fibers.

9. The carpet mat (1, 7) according to one of claims 1 to 8, **characterized in that** it has a weight/m² from 1,200 to 1,900 g/m² and **in that** the polymer layer (4, 10) is obtained by polymerization of 80 to 190 g/m² of said latex.

10. The carpet mat (1, 7) according to claim 9, **characterized in that** it is of the order of 1,750 g/m², and **in that** the needled (3) or tufted (8) textile is of the order of 550 g/m² and **in that** the polymer layer (4, 10) is obtained by polymerization of said latex in an amount of the order of 150 g/m².

11. The carpet mat (1, 7) according to claims 7 and 10, **characterized in that** the filler-loaded polymer layer (4, 10) contains of the order of 900 g/m² of filler, notably chalk, and **in that** the crumb rubber is of the order of 150 g/m².

12. A method for manufacturing a carpet mat (1, 7) according to claim 1, **characterized in that** it comprises the following operations:
a) preparing an aqueous foam from a SBR [styrene-butadiene-rubber] latex and from an inert filler, said latex comprising a sufficient proportion of styrene, so as to be thermoplastic, of at least 70% by volume of styrene, in the styrene-butadiene mixture of the non-filler-loaded latex, preferably of the order of at least 80% by volume of styrene,
b) coating a non-consolidated needled (3) or tufted (8) web by means of said foam,
c) subjecting the coated web to a heat treatment capable of polymerising the latex and to draining of the water in order to obtain a flat product and consolidate said web,
d) thermoforming said flat product to the desired three-dimensional configuration in order to obtain a carpet mat (1, 7), the latex weight proportion of which is at least 5%.

13. The method according to claim 12, **characterized in that** it includes an additional operation consisting of spraying crumb rubber on the foam coating before the thermoforming step.

## Patentansprüche

1. Teppich (1, 7), der dazu bestimmt ist, einen Erstausstattungsteppich in einem Kraftfahrzeug zu schützen, der eine Außenseite (2) aufweist, die aus einem Nadelfilztextil (3) oder Nadelflortextil (8) und aus einer Schicht (4, 10) eines Polymers mit Füllstoff gebildet ist und der eine dreidimensionale Konfiguration hat, die durch Wärmeformen erzielt wird, mit einem überhöhten Rand (5) entlang seiner Rückseite (1a) und mindestens einem Teil entlang seiner zwei seitlichen Seiten (1c, 1d), **gekennzeichnet:**
- **dadurch, daß** die Polymerschicht mit Füllstoff durch Polymerisation eines SBR-[Styrol-Butadien-Rubber]-Latex mit Füllstoff erzielt wird, der einen ausreichenden Anteil an Styrol aufweist, mindestens 70 Vol.% in dem Styrol-Butadien-Gemisch des Latex ohne Füllstoff, um wärmeformbar zu sein und dessen Gewichtsanteil des Latex ohne Füllstoff (1) mindestens 5 % beträgt,
- dadurch, daß das Nadelfilztextil (3) oder Nadelflortextil (8) durch die Polymerschicht (4) konsolidiert ist,
so daß erreicht wird, daß der Teppich, der eine dreidimensionale Konfiguration hat, dem Falten unter seinem eigenen Gewicht widersteht.

2. Teppich (1) nach Anspruch 1, **dadurch gekennzeichnet, daß** die Polymerschicht mit Füllstoff durch Polymerisation eines SBR-[Styrol-Butadien-Rubber]-Latex erzielt wird, der einen Anteil in der Größenordnung von mindestens 80 Vol.-% Styrol, insbesondere in der Größenordnung von 85 % aufweist.

3. Teppich (1) nach dem einen oder dem anderen der Ansprüche 1 und 2, **dadurch gekennzeichnet, daß** das Nadelfilztextil (3) ausschließlich aus Polyester besteht.

4. Teppich (7) nach dem einem oder dem anderen der Ansprüche 1 und 2, **dadurch gekennzeichnet, daß** das Nadelflortextil (8) ausschließlich aus Polypropylen oder aus Polyamid besteht.

5. Teppich (1, 7) nach einem der Ansprüche 1 bis 4, **dadurch gekennzeichnet, daß** das Verhältnis Füllstoffgewicht/Polymergewicht in der Polymerschicht mit Füllstoff (4, 10) in der Größenordnung von 5 bis 7 liegt.

6. Teppich (1, 7) nach einem der Ansprüche 1 bis 5, **dadurch gekennzeichnet, daß** er auf seiner Innenseite (5), die dazu bestimmt ist, auf den Erstausstattungsteppich gelegt zu werden, eine körnige Beschichtung aufweist.

7. Teppich (1, 7) nach Anspruch 6, **dadurch gekennzeichnet, daß** die körnige Beschichtung aus Kautschukstaub gebildet ist.

8. Teppich (1) nach einem der Ansprüche 3 bis 7, **dadurch gekennzeichnet, daß** das Nadelfilztextil (3) wenigstens zum Teil aus Recycling-Polyesterfasern besteht.

9. Teppich (1, 7) nach einem der Ansprüche 1 bis 8, **dadurch gekennzeichnet, daß** er ein Gewicht/m² von 1200 bis 1900 g/m² aufweist, und daß die Polymerschicht (4, 10) durch Polymerisation von 80 bis 190 g/m² des Latex erhalten wird.

10. Teppich (1, 7) nach Anspruch 9, **dadurch gekennzeichnet, daß** er in der Größenordnung von 1750 g/m² vorliegt, und daß dieses Nadelfilztextil (3) oder Nadelflortextil (8) in der Größenordnung von 550 g/m² vorliegt, und daß die Polymerschicht (4, 10) durch Polymerisation des Latex in der Größenordnung von 150 g/m² erhalten wird.

11. Teppich (1, 7) nach den Ansprüchen 7 und 10, **dadurch gekennzeichnet, daß** die Polymerschicht (4, 10) mit Füllstoff in der Größenordnung von 900 g/m² Füllstoff enthält, insbesondere Kreide, und daß der Kautschukstaub in der Größenordnung von 150 g/m² vorliegt.

12. Hersteltungsverfahren eines Teppichs (1, 7) nach Anspruch 1, **dadurch gekennzeichnet, daß** es die folgenden Vorgänge aufweist:
a) Vorbereiten eines wäßrigen Schaums ausgehend von einem SBR-[Styrol-Butadien-Rubber]-Latex und ausgehend von einem inerten Füllstoff, wobei der Latex einen ausreichenden Anteil an Styrol aufweist, um wärmeformbar zu sein, mindestens 70 Vol.- % Styrol in dem Styrol-Butadien-Gemisch des Latex ohne Füllstoff, vorzugsweise in der Größenordnung von mindestens 80 Vol.-% des Styrols,
b) Beschichten einer nicht konsolidierten Nadelfilzlage (3) oder Nadelflorlage (8) mit Hilfe des Schaums,
c) Unterwerfen der beschichteten Lage einer Wärmebehandlung, die den Latex polymerisieren kann, Ableiten des Wassers, so daß ein flaches Produkt erhalten wird, und Konsolidieren der Lage,
d) Wärmeformen das flachen Produkts zu der gewünschten Konfiguration, um einen dreidimensionalen Teppich (1, 7) zu erhalten, dessen Gewichtsanteil an Latex mindestens 5 % beträgt.

13. Verfahren nach Anspruch 12, **dadurch gekennzeichnet, daß** es einen ergänzenden Vorgang aufweist, der darin besteht, vor dem Schritt des Wärmeformens den Kautschukstaub auf der Schaumbeschichtung zu zerstäuben.
